# EUROPEAN PATENT SPECIFICATION

(11) **EP 2 882 216 B1**
(45) Date of publication and mention of the grant of the patent: **26.07.2017**
(21) Application number: 13840014.8
(22) Date of filing: 29.08.2013
(51) Int. Cl.: H04W 24/04, H04W 88/08

(54) **DEVICE AND METHOD FOR CONTROLLING, SUPERVISING AND GIVING AN ALARMING FROM A POWER SUPPLY OF BASE STATION**
VORRICHTUNG UND VERFAHREN ZUR STEUERUNG, ÜBERWACHUNG UND ERZEUGUNG EINER ALARMMELDUNG FÜR DIE STROMVERSORGUNG EINER BASISSTATION
DISPOSITIF ET PROCÉDÉ POUR LE CONTRÔLE, LA SUPERVISION DE L'ALIMENTATION ÉLECTRIQUE D'UNE STATION DE BASE, ET LE DÉCLENCHEMENT D'UNE ALARME EN RELATION AVEC LADITE ALIMENTATION ÉLECTRIQUE

(30) Priority: 21.09.2012 CN 201210355183
(43) Date of publication of application: 10.06.2015
(73) Proprietor: ZTE Corporation, Shenzhen, Guangdong 518057 (CN)
(72) Inventor: YI, Zhe, Shenzhen Guangdong 518057 (CN); LIU, Rong, Shenzhen Guangdong 518057 (CN); WANG, Tao, Shenzhen Guangdong 518057 (CN)
(74) Representative: Awapatent AB
(86) International application number: PCT/CN2013/082515
(87) International publication number: WO 2014/044112

(56) References cited:
- CN-A- 101 330 706
- CN-A- 102 869 032
- CN-U- 202 121 786
- US-A1- 2004 205 181
- US-A1- 2006 294 214
- US-A1- 2009 006 010
- US-A1- 2009 070 447
- US-A1- 2011 230 182

## Description

### Technical Field

The present document relates to the field of communications, and in particular, to an apparatus and method for controlling and supervising and giving an alarm for a power supply of a base station.

### Background of the Related Art

For mobile communication systems, in addition to the base station system, the center room also needs to manage the power supply equipment. The Power supply equipment has a Control & Supervisory Unit (CSU for short hereinafter), which is responsible for collecting monitored information of the power supply equipment, but the CSU will not actively report the monitored information to the wireless network management background, and therefore, the remote user can not immediately judge whether the current power supply equipment operates in normal state.

In order to monitor whether there is an alarm for the power supply system, in the related technologies, there are two modes for intensively managing the power supply system: one is that whether the power supply system is operating normally is reported in a form of dry contacts; the other is that a channel is provided to the power supply system and the power supply is monitored by a power supply network manager. For the first mode, only two states of the power supply system can be reported, which are normality or alarm, while the number of the dry contacts is very limited, and the dry contacts can only monitor a small amount of information, which can not meet the maintenance and management requirements on a large-scale power supply system. The second mode can provide a lot of monitored data, but needs to provide a channel to the power supply network manager, which will occupy bandwidth resources in the base station system, and need to configure a power supply network management server and buy power supply network management software, thus increasing the cost of networking for the operators.

The document US20090070447A1 discloses a system and method for integrating an intelligent electronic device (IED) in a network management system. The IED may be configured to communicate using the network management protocol of the network management system. IED variables may be mapped to associated network management protocol variables to allow the network management system to access the IED variables using the network management protocol.

The document US20110230182A1discloses a monitoring unit for a remote site, which includes a processor and memory configured to receive definitions of measurements and alarms to be collected at the remote site and to store the definitions of the measurement and alarms, a plurality of port connectors for communicating the processor with downstream collection devices that collect the measurements and alarms at the remote site, and a communication system for reporting the collected measurements and alarms to upstream systems. The definitions for the alarms and measurements can be provided from the port connections, stored script processes, and SNMP proxy. The memory is configured to automatically store a history of the measurements and alarms collected which can be exported to the upstream. The processor is configured to collect derived measurements not directly collected from the downstream collection devices.

The document US20090006010A1 discloses a method and system for remotely monitoring and controlling one or more cell-sites. The method includes (a) receiving data indicative of a status of at least one battery of at least one cell-site at a remote processing device, wherein the status relates to at least one of a voltage status, a conductance status, and a temperature status; (b) processing the data at the processing device; (c) determining at least one further action that should be taken by the at least one cell-site in response to the data; and (d) sending from the processing device at least one control signal to the at least one cell-site configured to cause the at least one cell-site to take the at least one further action.

The document US20060294214A1 discloses an apparatus, system, method, and article for event logging for broadband wireless access networks.

### Summary of the Invention

The embodiments of the present document provide an apparatus and method for controlling and supervising and giving an alarm for a power supply of a base station, in which the base station system directly monitors the power supply and reports an alarm.

The embodiments of the present document provide an apparatus for controlling and supervising and giving an alarm for a power supply of a base station, applied in a base station system, according to the subject-matter of claim 1. Alternatively, the alarm processing module in the apparatus comprises:
an extraction module, configured to extract the real-time alarm information from the power supply data frame;
a record module, configured to record last reported alarm information;
a first judgment module, configured to judge whether the real-time alarm information is consistent with the last reported alarm information, to obtain a first judgment result; and
a report module, configured to report the real-time alarm information to the wireless network management server when the first judgment result indicates that the real-time alarm information is inconsistent with the last reported alarm information, so as to enable the wireless network management server to perform alarm processing according to the real-time alarm information.

Alternatively, the alarm processing module in the apparatus further comprises:
an update module, configured to update the last reported alarm information recorded in the record module to the real-time alarm information when the first judgment result indicates that the real-time alarm information is inconsistent with the last reported alarm information.

Alternatively, the apparatus further comprises:
a first check module, configured to check whether the power supply data frame is correct, to obtain a first check result;
wherein, the alarm processing module is configured to report the real-time alarm information in the power supply data frame to the wireless network management server when the first check result indicates that the power supply data frame is correct, so as to enable the wireless network management server to perform alarm processing according to the real-time alarm information; and discard the power supply data frame when the first check result indicates that the power supply data frame is incorrect.

Alternatively, the apparatus further comprises:
a second check module, configured to check whether the power supply data frame is correct, to obtain a second check result; and
a second judgment module, configured to judge whether the power supply data frame is of an alarm type when the second check result indicates that the power supply data frame is correct, to obtain a second judgment result;
wherein, the alarm processing module is configured to report the real-time alarm information in the power supply data frame to the wireless network management server only when the second judgment result indicates that the power supply data frame is of the alarm type, so as to enable the wireless network management server to perform alarm processing according to the real-time alarm information.

The embodiments of the present document further provide a method for controlling and supervising and giving an alarm for a power supply of a base station, applied in a base station system according to the subject-matter of claim 6. Alternatively, reporting real-time alarm information in the power supply data frame to a wireless network management server, so as to enable the wireless network management server to perform alarm processing according to the real-time alarm information comprises:
extracting the real-time alarm information from the power supply data frame;
judging whether the real-time alarm information is consistent with the last reported alarm information which is pre-recorded, to obtain a first judgment result; and
when the first judgment result indicates that the real-time alarm information is inconsistent with the last reported alarm information, reporting the real-time alarm information to the wireless network management server, so as to enable the wireless network management server to perform alarm processing according to the real-time alarm information.

Alternatively, reporting real-time alarm information in the power supply data frame to a wireless network management server, so as to enable the wireless network management server to perform alarm processing according to the real-time alarm information comprises:
when the first judgment result indicates that the real-time alarm information is inconsistent with the last reported alarm information, updating the last reported alarm information to the real-time alarm information.

Alternatively, the method further comprises:
checking whether the power supply data frame is correct, to obtain a first check result;
wherein, reporting real-time alarm information in the power supply data frame to a wireless network management server, so as to enable the wireless network management server to perform alarm processing according to the real-time alarm information comprises:
   when the first check result indicates that the power supply data frame is correct, reporting the real-time alarm information in the power supply data frame to the wireless network management server, so as to enable the wireless network management server to perform alarm processing according to the real-time alarm information; and when the first check result indicates that the power supply data frame is incorrect, discarding the power supply data frame.

Alternatively, the method further comprises:
checking whether the power supply data frame is correct, to obtain a second check result; and
when the second check result indicates that the power supply data frame is correct, judging whether the power supply data frame is of an alarm type, to obtain a second judgment result;
wherein, reporting real-time alarm information in the power supply data frame to a wireless network management server, so as to enable the wireless network management server to perform alarm processing according to the real-time alarm information comprises:
   only when the second judgment result indicates that the power supply data frame is of the alarm type, reporting the real-time alarm information in the power supply data frame to the wireless network management server, so as to enable the wireless network management server to perform alarm processing according to the real-time alarm information.

In the apparatus and method for controlling and supervising and giving an alarm for a power supply of a base station according to the embodiments of the present document, there is no need to use the power supply network manager to monitor the power supply, and instead, the base station system directly monitors the power supply and reports the alarm, and therefore, there is also no need to establish a transparent channel through the whole base station system, which saves the bandwidth resources between the base station controller and the base station transceiver system;
in the apparatus and method for controlling and supervising and giving an alarm for a power supply of a base station according to the embodiments of the present document, the reported real-time alarm data includes four alarms terms, i.e., alternating current power distribution, direct current power distribution, a rectifier and an environment monitor, which solves the disadvantage that only a few alarms can be reported due to limitation on the number of the dry contacts;
in the apparatus and method for controlling and supervising and giving an alarm for a power supply of a base station according to the embodiments of the present document, if it only needs to monitor the alarm of the power supply equipment, the power supply network manager will not be needed any more, which results in an advantage of saving cost for the clients, occupying less resources, and saving time and human cost and enhancing the networking efficiency at the same time; and
in the apparatus and method for controlling and supervising and giving an alarm for a power supply of a base station according to the embodiments of the present document, the channel provided to the power supply network manager is maintained compatibly, and if an operator is configured with a power supply network manager, the power supply can be monitored by the power supply network manager, which does not influence the functions which exist previously.

### Brief Description of Drawings

Fig. 1 is a structural diagram of an apparatus for controlling and supervising and giving an alarm for a power supply of a base station according to an embodiment of the present document;
Fig. 2 is a structural diagram of another apparatus for controlling and supervising and giving an alarm for a power supply of a base station according to an embodiment of the present document;
Fig. 3 is a flowchart of a method for controlling and supervising and giving an alarm for a power supply of a base station according to an embodiment of the present document; and

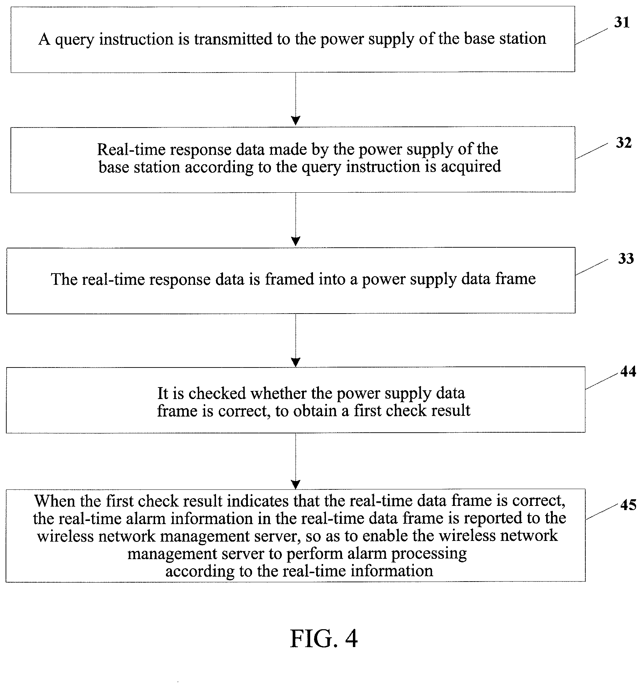

Fig. 4 is a flowchart of another method for controlling and supervising and giving an alarm for a power supply of a base station according to an embodiment of the present document.

### Preferred Embodiments of the Invention

The embodiments of the present document will be illustrated in detail hereinafter in conjunction with accompanying drawings. It should be illustrated that, in the case of no conflict, the embodiments of this application and the features in the embodiments could be combined randomly with each other.

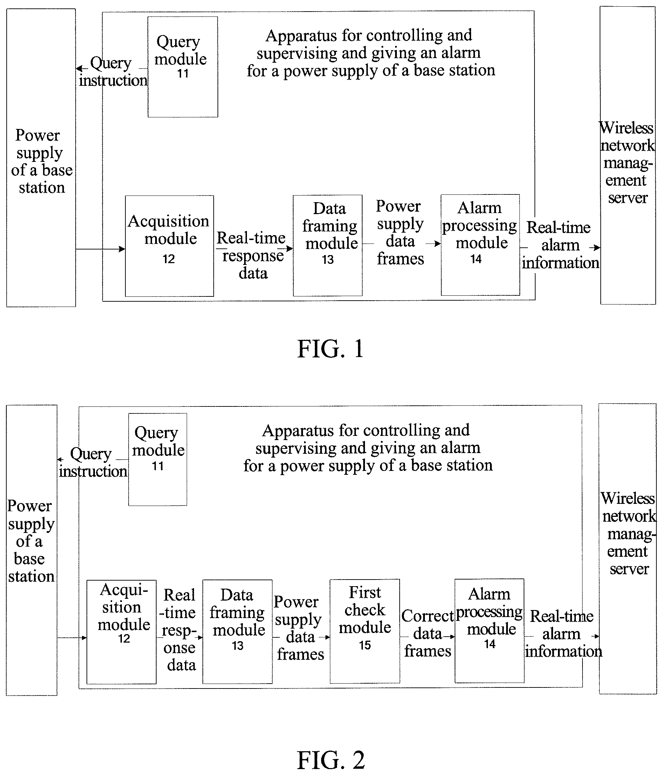

The embodiments of the present document provide an apparatus for controlling and supervising and giving an alarm for a power supply of a base station, which is applied in a base station system. As shown in Fig. 1, the apparatus comprises:
a query module 11, configured to transmit a query instruction to the power supply of the base station;
an acquisition module 12, configured to acquire real-time response data made by the power supply of the base station according to the query instruction;
a data framing module 13, configured to frame the real-time response data into a power supply data frame; and
an alarm processing module 14, configured to report real-time alarm information in the power supply data frame to a wireless network management server, so as to enable the wireless network management server to perform alarm processing according to the real-time alarm information.

The process of controlling and supervising and giving an alarm for a power supply of a base station is described as follows.

The query module 11 in the apparatus will transmit a query instruction to the power supply of the base station, wherein, the transmitted query instruction comprises a device address of the power supply equipment, a version number, an alternating current power distribution module, a direct current power distribution module, a rectifier and/or an environment monitor;
the power supply equipment responds to each query instruction, to form real-time response data to be acquired by the acquisition module 12;
then, the data framing module 13 frames the real-time response data into a power supply data frame with a frame head of 0x7e and a frame end of 0x0d according to the YD/T1104-2001 communication protocol;

At last, the alarm processing module 14 reports the real-time alarm information in the power supply data frame to a wireless network management server, so as to enable the wireless network management server to perform alarm processing according to the real-time alarm information.

With the apparatus for controlling and supervising and giving an alarm for a power supply of a base station according to the embodiments of the present document, there is no need to use the power supply network manager to monitor the power supply, and instead, the base station system directly monitors the power supply and reports the alarm, and therefore, there is also no need to establish a transparent channel through the whole base station system, which saves the bandwidth resources between the base station controller and the base station transceiver system; and at the same time, the reported real-time alarm data includes four alarms terms, i.e., alternating current power distribution, direct current power distribution, a rectifier and an environment monitor, which solves the disadvantage that only a few alarms can be reported due to limitation on the number of the dry contacts.

In the apparatus according to the embodiments of the present document, the implementation of the query module 11 may be triggered, i.e., the query module 11 is triggered by a user at a certain time to transmit the query instruction; and it may be timed, i.e., a time and/or period for transmission of the query instruction is selected by a user, and the query instruction is transmitted automatically, regularly, and circularly by the query module 11. Of course, there are various ways for implementing the query module 11, which will not be described here in detail.

In the apparatus according to the embodiments of the present document, the alarm processing module 14 may comprise:
an extraction module, configured to extract the real-time alarm information from the power supply data frame;
a record module, configured to record last reported alarm information;
a first judgment module, configured to judge whether the real-time alarm information is consistent with the last reported alarm information, to obtain a first judgment result; and
a report module, configured to report the real-time alarm information to the wireless network management server when the first judgment result indicates that the real-time alarm information is inconsistent with the last reported alarm information, so as to enable the wireless network management server to perform alarm processing according to the real-time alarm information.

The power supply data frame includes a type, a location and a fault state of the power supply of the base station, and the extraction module will extract the real-time alarm information from the power supply data frame;
the first judgment module is configured to compare the real-time alarm information with the last reported alarm information recorded in the record module, to judge whether they are consistent, so as to obtain a first judgment result;
if the first judgment result indicates that the real-time alarm information is totally the same as the last reported alarm information, no processing is performed, i.e., the alarm will not be issued repeatedly; and if the first judgment result indicates that the real-time alarm information is not the same as the last reported alarm information, the report module reports the real-time alarm information to the wireless network management server, so as to enable the wireless network management server to perform alarm processing according to the real-time alarm information. Wherein, there are two change cases of the real-time alarm information:
in case one, if the state of the power supply changes from a normal state to a fault state, an alarm will be reported; and
in case two, if the state of the power supply changes from the fault state to a recovery state, an alarm recovery will be reported.

The alarm processing module 14 extracts the real-time alarm information from the power supply data frame, compares the real-time alarm information with the last reported alarm information recorded, and when the comparison result indicates that the real-time alarm information is not the same as the last reported alarm information recorded, reports the real-time alarm information, i.e., the alarm will not be issued repeatedly, and the reported alarm information can directly reflect the state of the power supply.

At the same time, in consideration of ensuring the accuracy of the comparison result, the alarm processing module 14 in the apparatus further comprises:
an update module, configured to update the last reported alarm information recorded in the record module to the real-time alarm information when the first judgment result indicates that the real-time alarm information is inconsistent with the last reported alarm information.

In the case that the first judgment result indicates that the alarm information changes, the update module will update the last reported alarm information recorded in the record module to the real-time alarm information, for use in the next comparison, which ensures the accuracy of the comparison result.

At the same time, in consideration of occurrence of an incorrect data frame in the process of framing the data frame, as shown in Fig, 2, the apparatus illustrated in Fig. 1 further comprises:
a first check module 15, configured to check whether the power supply data frame is correct, to obtain a first check result;
wherein, the alarm processing module 14 is configured to report the real-time alarm information in the power supply data frame to the wireless network management server when the first check result indicates that the power supply data frame is correct, so as to enable the wireless network management server to perform alarm processing according to the real-time alarm information; otherwise, discard the power supply data frame.

The apparatus according to the embodiments of the present document can check the framed power supply data frame, discard the data frame which does not pass the check, and report the alarm information in the data frame which passes the check.

At the same time, in consideration that not all the correct data frames are the data frames including the alarm information and the alarm processing module 14 only extracts and reports the alarm information from the correct data frame including the alarm information, the apparatus illustrated in Fig. 1 further comprises:
a second check module, configured to check whether the power supply data frame is correct, to obtain a second check result; and
a second judgment module, configured to judge whether the power supply data frame is of an alarm type when the second check result indicates that the power supply data frame is correct, to obtain a second judgment result;
wherein, the alarm processing module 14 is configured to report the real-time alarm information in the power supply data frame to the wireless network management server only when the second judgment result indicates that the power supply data frame is of the alarm type , so as to enable the wireless network management server to perform alarm processing according to the real-time alarm information.

The check module firstly check the power supply data frame, to obtain a check result, i.e., indicating that the power supply data frame is a correct data frame or an incorrect data frame;

There are two kinds of correct data frames: alarm data frames or manufacturer information data frames. The second judgment module is configured to judge whether the correct data frame is a data frame including the alarm information, i.e., judging whether the correct data frame is of an alarm type, and select the data frames including the alarm information from the correct data frames;
the alarm processing module 14 reports the real-time alarm information in the correct data frame including the alarm information to the wireless network management server.

The apparatus according to the embodiments of the present document can check the power supply data frame, and continues to judge whether the data frame which is checked to be correct is of an alarm type. The data frame of the alarm type is a data frame including the alarm information, and the apparatus only reports the alarm information in the correct data frame of the alarm type.

At the same time, the apparatus can also provide a transport channel to the power supply network manager. The wireless network management server will communicate with the base station through a base station controller or a wireless network controller. The wireless network management server usually manages two or more base stations, each base station being supported by a power supply. The wireless network management server can configure the managed base station in the background, including configuring an address of the base station, a type of the power supply equipment, a processing mode (transparent transmission and parsing) and a slot number of a board connected to the power supply equipment. Only when a processing mode of a certain base station is configured to be parsing, the apparatus will obtain the real-time response data of the power supply of the base station, to parse the alarm data; and if the processing mode of one base station is configured to be transparent transmission, the apparatus according to the embodiments of the present document will not obtain reply data of the power supply of the base station, and instead, wait for the power supply network manager to transmit a query instruction to the power supply equipment, and parse the response data of the power supply equipment, to display the alarm and other state information of the power supply equipment. That is, the channel provided to the power supply network manager is maintained compatibly, and if an operator is configured with a power supply network manager, the power supply can be monitored by the power supply network manager, which does not influence the functions which exist previously.

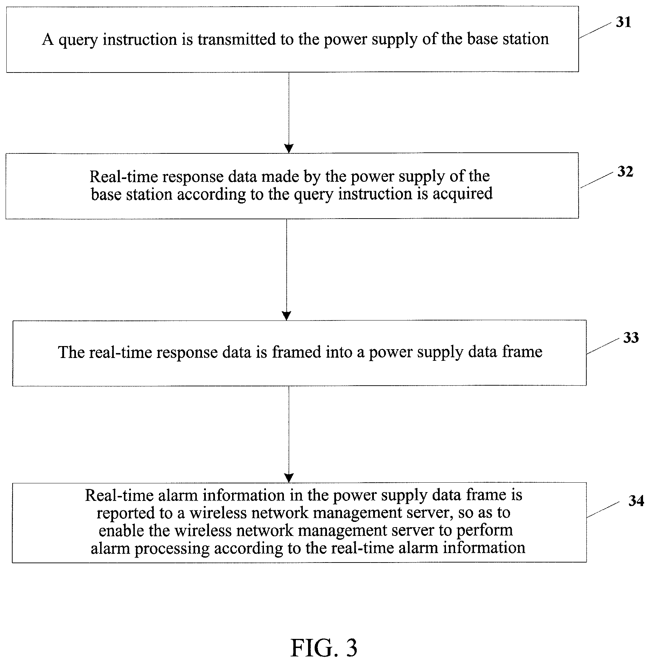

The embodiments of the present document further provide a method for controlling and supervising and giving an alarm for a power supply of a base station, which is applied in a base station system. As shown in Fig. 3, the method comprises the following steps.

In step 31, a query instruction is transmitted to the power supply of the base station.

In step 32, real-time response data made by the power supply of the base station according to the query instruction is acquired.

In step 33, the real-time response data is framed into a power supply data frame.

In step 34, real-time alarm information in the power supply data frame is reported to a wireless network management server, so as to enable the wireless network management server to perform alarm processing according to the real-time alarm information.

The method of controlling and supervising and giving an alarm for a power supply of a base station is described as follows.

Firstly, a query instruction is transmitted to the power supply of the base station, wherein, the transmitted query instruction comprises a device address of the power supply equipment, a version number, an alternating current power distribution module, a direct current power distribution module, a rectifier and/or an environment monitor;
the power supply equipment responds to each query instruction, i.e., the power supply of the base station makes real-time response data according to the query instruction;
then, the real-time response data is framed into a power supply data frame with a frame head of 0x7e and a frame end of 0x0d according to the YD/T1104-2001 communication protocol;
the real-time alarm information in the power supply data frame is reported to a wireless network management server, so as to enable the wireless network management server to perform alarm processing according to the real-time alarm information.

In the method according to the embodiments of the present document, there is no need to use the power supply network manager to monitor the power supply, and instead, the base station system directly monitors the power supply and reports the alarm, and therefore, there is also no need to establish a transparent channel through the whole base station system, which saves the bandwidth resources between the base station controller and the base station transceiver system; and at the same time, the reported real-time alarm data includes four alarm terms, i.e., alternating current power distribution, direct current power distribution, a rectifier and an environment monitor, thus solving the disadvantage that only a few alarms can be reported due to limitation on the number of the dry contacts.

In the method according to the embodiments of the present document, the implementation of the step 31 may be triggered, i.e., the query module is triggered by a user at a certain time to transmit the query instruction; or may be timed, i.e., a time and/or period for transmission of the query instruction is selected by a user, and the query instruction is transmitted automatically, regularly, and circularly.

In the method according to the embodiments of the present document, step 34 may include the following steps.

In step 341, the real-time alarm information is extracted from the power supply data frame.

In step 342, it is judged whether the real-time alarm information is consistent with the last reported alarm information which is previously recorded, to obtain a first judgment result.

In step 343, when the first judgment result indicates that the real-time alarm information is inconsistent with the last reported alarm information, the real-time alarm information is reported to the wireless network management server, so as to enable the wireless network management server to perform alarm processing according to the real-time alarm information.

The power supply data frame includes a type, a location and a fault state of the power supply of the base station, and the real-time alarm information is extracted from the power supply data frame; then the real-time alarm information is compared with the last reported alarm information recorded in the record module, to judge whether they are consistent, so as to obtain a first judgment result; if the first judgment result indicates that the real-time alarm information is totally the same as the last reported alarm information, no processing is performed, i.e., the alarm will not be issued repeatedly; and if the first judgment result indicates that the real-time alarm information is not the same as the last reported alarm information, the real-time alarm information is reported to the wireless network management server, so as to enable the wireless network management server to perform alarm processing according to the real-time alarm information. Wherein, there are two change cases of the real-time alarm information.

In case one, if the state of the power supply changes from a normal state to a fault state, an alarm will be reported; and
in case two, if the state of the power supply changes from the fault state to a recovery state, an alarm recovery will be reported.

In the method, extracts the real-time alarm information is extracted from the power supply data frame, the real-time alarm information is compared with the last reported alarm information recorded, and when the comparison result indicates that the real-time alarm information is not the same as the last reported alarm information recorded, the real-time alarm information is reported , i.e., the alarm will not be issued repeatedly, and the reported alarm information can directly reflect the state of the power supply.

At the same time, in consideration of ensuring the accuracy of the comparison result, the step 34 may further comprise the following steps.

In step 344, when the first judgment result indicates that the real-time alarm information is inconsistent with the last reported alarm information, the last reported alarm information is updated to the real-time alarm information.

In the case that the first judgment result indicates that the alarm information changes, in the step 344, the last reported alarm information is updated to the real-time alarm information, for use in the next comparison, which ensures the accuracy of the comparison result.

At the same time, in consideration of occurrence of an incorrect data frame in the process of framing the data frame, as shown in Fig, 4, the method further comprises the following steps.

In step 44, it is checked whether the power supply data frame is correct, to obtain a first check result.

In step 45, reporting real-time alarm information in the power supply data frame to a wireless network management server, so as to enable the wireless network management server to perform alarm processing according to the real-time alarm information comprises: when the first check result indicates that the power supply data frame is correct, reporting the real-time alarm information in the power supply data frame to the wireless network management server, so as to enable the wireless network management server to perform alarm processing according to the real-time alarm information; and when the first check result indicates that the power supply data frame is incorrect, discarding the power supply data frame.

The method according to the embodiments of the present document can check the framed power supply data frame, discard the data frame which does not pass the check, and report the alarm information in the data frame which passes the check.

At the same time, in consideration that not all the correct data frames are the data frames including the alarm information and the alarm processing module only extracts and reports the alarm information from the correct data frame including the alarm information, the method further comprises the following steps.

It is checked whether the power supply data frame is correct, to obtain a second check result.

When the second check result indicates that the power supply data frame is correct, it is judged whether the power supply data frame is of an alarm type, to obtain a second judgment result.

Reporting real-time alarm information in the power supply data frame to a wireless network management server, so as to enable the wireless network management server to perform alarm processing according to the real-time alarm information comprises: reporting the real-time alarm information in the power supply data frame to the wireless network management server only when the second judgment result indicates that the power supply data frame is of the alarm type, so as to enable the wireless network management server to perform alarm processing according to the real-time alarm information.

The power supply data frame is checked, to obtain a check result, i.e., dividing the power supply data frames into correct data frames and incorrect data frames; there are two kinds of correct data frames: alarm data frames or manufacturer information data frames. It is judged whether the correct data frame is a data frame including the alarm information, i.e., selecting the data frames including the alarm information from the correct data frames; and reporting the real-time alarm information in the correct data frame including the alarm information to the wireless network management server.

The process of controlling and supervising and giving an alarm for a power supply of a base station will be described in detail below in conjunction with practical conditions, which comprises the following steps.

In step A, the wireless network management server performs background configuration.

Wherein, the background configuration includes configuring an address of the base station, a type of the power supply equipment, a processing mode (transparent transmission and parsing) and a slot number of a board connected to the power supply equipment.

In step B, if the background configuration of a power supply of a base station is of a parsing mode, the power supply network manager waits to transmit a query instruction to the power supply equipment, and parses the response data of the power supply equipment, to display the alarm and other state information of the power supply equipment. The monitoring module in the embodiments of the present document will provide a transparent transmission channel. If the background configuration of the power supply of the base station is of a parsing mode, step C will be performed.

In step C, if the background configuration of the power supply of the base station is of a parsing mode, the query instruction is transmitted regularly and circularly by the query module to the power supply of the base station.

The transmitted query instruction comprises a device address of the power supply equipment, a version number, an alternating current power distribution module, a direct current power distribution module, a rectifier and an environment monitor. The power supply equipment responds to each query instruction, to form real-time response data to be acquired by the acquisition module.

In step D, the data framing module frames the obtained real-time response data of the power supply equipment into a frame, and the power supply data frame is checked by the check module.

A set of data frames is formed with a frame head of 0x7e and a frame end of 0x0d, according to the YD/T1104-2001 communication protocol. If the data frame does not pass the check (including length check, check, and response code check etc.), the data frame is discarded, and if the data frame passes the check, step E is performed.

In step E, the correct data frame is judged by the second judgment module.

The data frames are divided into two kinds: alarm data frames or manufacturer information data frames. If the data frame is the alarm data frame, the extraction module extracts the alarm data.

In step F, the first judgment module compares the acquisition result of this time extracted by the extraction module with the last acquisition result information recorded by the record module one by one, and if all the comparison results are identical, no processing is performed, and if there is a difference, step G is performed.

In step G, the report module reports the alarm information, and if the state of alarm data changes from a normal state to a fault state, an alarm will be reported to the alarm module of the base station, and if the state of the alarm data changes from the fault state to the recovery state, an alarm recovery will be reported to the alarm module of the base station, and will finally be displayed on the background wireless network manager.

In the above process, the base station directly monitors the power supply, and reports the alarm. Therefore, there is also no need to establish a transparent channel through the whole base station system, which saves the bandwidth resources between the base station controller and the base station transceiver system; and at the same time, the reported real-time alarm data includes four alarms terms, i.e., alternative current power distribution, direct current power distribution, a rectifier and an environment monitor, which solves the disadvantage that only a few alarms can be reported due to limitation on the number of the dry contacts. In the implementation, if it only needs to monitor the alarm of the power supply equipment, the power supply network manager will not be needed any more, which results in an advantage of saving cost for the clients, occupying less resources, and saving time and human cost and enhancing the networking efficiency at the same time. Meanwhile, the embodiments of the present document maintain compatibly the channel provided to the power supply network manager, and if an operator is configured with a power supply network manager, the power supply can be monitored by the power supply network manager, which does not influence the functions which exist previously.

A person having ordinary skill in the art can understand that all or part of steps in the above method can be implemented by programs instructing related hardware, which can be stored in a computer readable storage medium, such as a read-only memory, a disk or a disc etc. Alternatively, all or part of steps in the above embodiments can also be implemented by one or more integrated circuits. Accordingly, each module/unit in the above embodiments can be implemented in the form of hardware, or can also be implemented in the form of software functional module. The embodiments of the present document are not limited to any particular form of a combination of hardware and software.

### Industrial Applicability

The apparatus and method according to the embodiments of the present document save the bandwidth resources between the base station controller and the base station transceiver system; solve the disadvantage that only a few alarms can be reported due to limitation on the number of the dry contacts; save cost for the clients, occupy less resources, save time and human cost, and enhance the networking efficiency; and maintain compatibly the channel provided to the power supply network manager.

## Claims

1. An apparatus for controlling and supervising and giving an alarming from a power supply of a base station, the apparatus is applied to a base station system, and the apparatus comprises:
a query module (11), configured to transmit a query instruction to the power supply of the base station; wherein, the transmitted query instruction comprises an alternative current power distribution module, a direct current power distribution module, a rectifier and an environment monitor of the power supply of the base station;
an acquisition module (12), configured to acquire real-time response data made by the power supply of the base station according to the query instruction;
a data framing module (13), configured to frame the real-time response data into a power supply data frame with a frame head of 0x7e and a frame end of 0x0d according to a communication protocol YD/T 1104-2001; wherein, the power supply data frame includes a fault state of the power supply of the base station; and
an alarm processing module (14), configured to report real-time alarm information in the power supply data frame to the wireless network management server; wherein, the real-time alarm information comprises alarm terms of alternative current power distribution, direct current power distribution, a rectifier and an environment monitor;
**characterized in that** the base station system is configured by a wireless network management server with a processing mode selected among transparent transmission and parsing, only when the processing mode is configured to be parsing, the acquisition module (12) is configured to acquire the real-time response data made by the power supply of the base station to parse alarm data; when the processing mode is configured to be transparent transmission, the acquisition module (12) is configured to not acquire the real-time response data made by the power supply of the base station, and wait for a power supply network manager to transmit a query instruction to the power supply equipment of the base station, and parse response data of the power supply equipment.

2. The apparatus according to claim 1, wherein, the alarm processing module (14) comprises:
an extraction module, configured to extract the real-time alarm information from the power supply data frame;
a record module, configured to record last reported alarm information;
a first judgment module, configured to judge whether the real-time alarm information is consistent with the last reported alarm information, to obtain a first judgment result; and
a report module, configured to report the real-time alarm information to the wireless network management server when the first judgment result indicates that the real-time alarm information is inconsistent with the last reported alarm information.

3. The apparatus according to claim 2, wherein, the alarm processing module (14) further comprises:
an update module, configured to update the last reported alarm information recorded in the record module to the real-time alarm information when the first judgment result indicates that the real-time alarm information is inconsistent with the last reported alarm information.

4. The apparatus according to claim 1, further comprising:
a first check module (15), configured to check whether the power supply data frame is correct, to obtain a first check result;
wherein, the alarm processing module (14) is configured to report the real-time alarm information in the power supply data frame to the wireless network management server when the first check result indicates that the power supply data frame is correct; and discard the power supply data frame when the first check result indicates that the power supply data frame is incorrect.

5. The apparatus according to claim 1, further comprising:
a second check module, configured to check whether the power supply data frame is correct, to obtain a second check result; and
a second judgment module, configured to judge whether the power supply data frame is of an alarm type when the second check result indicates that the power supply data frame is correct, to obtain a second judgment result;
wherein, the alarm processing module (14) is configured to report the real-time alarm information in the power supply data frame to the wireless network management server only when the second judgment result indicates that the power supply data frame is of the alarm type.

6. A method for controlling and supervising and giving an alarm from a power supply of a base station, the method is applied to a base station system, and the method comprises:
transmitting a query instruction to the power supply of the base station (31);
wherein, the transmitted query instruction comprises an alternating current power distribution module, a direct current power distribution module, a rectifier and an environment monitor of the power supply of the base station;
acquiring real-time response data made by the power supply of the base station according to the query instruction (32);
framing the real-time response data into a power supply data frame with a frame head of 0x7e and a frame end of 0x0d according to a communication protocol YD/T 1104-2001 (33); wherein, the power supply data frame includes a fault state of the power supply of the base station; and
reporting real-time alarm information in the power supply data frame to a wireless network management server (34); wherein, the real-time alarm information comprises alarm terms of alternative current power distribution, direct current power distribution, a rectifier and an environment monitor;
**characterized in that** the acquiring real-time response data made by the power supply of the base station according to the query instruction (32) comprises:
a wireless network management server configuring a processing mode selected among transparent transmission and parsing for the base station system;
only when the processing mode is configured to be parsing, acquiring real-time response data made by the power supply of the base station according to the query instruction to parse alarm data;
when the processing mode is configured to be transparent transmission, not acquiring real-time response data made by the power supply of the base station, waiting for a power supply network manager to transmit a query instruction to the power supply equipment, and parsing response data of the power supply equipment.

7. The method according to claim 6, wherein, reporting real-time alarm information in the power supply data frame to a wireless network management server, comprises:
extracting the real-time alarm information from the power supply data frame;
judging whether the real-time alarm information is consistent with the last reported alarm information which is pre-recorded, to obtain a first judgment result; and
when the first judgment result indicates that the real-time alarm information is inconsistent with the last reported alarm information, reporting the real-time alarm information to the wireless network management server.

8. The method according to claim 7, wherein, reporting real-time alarm information in the power supply data frame to a wireless network management server, comprises:
when the first judgment result indicates that the real-time alarm information is inconsistent with the last reported alarm information, updating the last reported alarm information to the real-time alarm information.

9. The method according to claim 6, further comprising:
checking whether the power supply data frame is correct, to obtain a first check result (44);
wherein, reporting real-time alarm information in the power supply data frame to a wireless network management server, comprises:
when the first check result indicates that the power supply data frame is correct, reporting the real-time alarm information in the power supply data frame to the wireless network management server (45); and when the first check result indicates that the power supply data frame is incorrect, discarding the power supply data frame.

10. The method according to claim 6, further comprising:
checking whether the power supply data frame is correct, to obtain a second check result; and
when the second check result indicates that the power supply data frame is correct, judging whether the power supply data frame is of an alarm type, to obtain a second judgment result;
wherein, reporting real-time alarm information in the power supply data frame to a wireless network management server, comprises:
only when the second judgment result indicates that the power supply data frame is of the alarm type, reporting the real-time alarm information in the power supply data frame to the wireless network management server.

## Patentansprüche

1. Vorrichtung zum Steuern und Beaufsichtigen und Ausgeben einer Warnmeldung von einer Stromversorgung einer Basisstation, wobei die Vorrichtung auf ein Basisstationssystem angewendet wird, und die Vorrichtung Folgendes umfasst:
ein Abfragemodul (11), das dafür konfiguriert ist, eine Abfrageanweisung an die Stromversorgung der Basisstation zu senden, wobei die gesendete Abfrageanweisung ein Wechselstromverteilungsmodul, ein Gleichstromverteilungsmodul, einen Gleichrichter und eine Umgebungsüberwachungsvorrichtung der Stromversorgung der die Basisstation umfasst,
ein Erfassungsmodul (12), das dafür konfiguriert ist, Echtzeitantwortdaten zu erfassen, die durch die Stromversorgung der Basisstation gemäß der Abfrageanweisung erstellt werden,
ein Datenrahmungsmodul (13), das dafür konfiguriert ist, die Echtzeitantwortdaten in einem Stromversorgungsdatenrahmen mit einem Rahmenkopf von 0x7e und einem Rahmenende von OxOd gemäß einem Kommunikationsprotokoll YD/T 1104-2001 zu rahmen, wobei der Stromversorgungsdatenrahmen einen Fehlerzustand der Stromversorgung der Basisstation enthält, und
ein Alarmverarbeitungsmodul (14), das dafür konfiguriert ist, Echtzeitalarminformationen in dem Stromversorgungsdatenrahmen an den Drahtlosnetzverwaltungsserver zu melden, wobei die Echtzeitalarminformationen Alarmbedingungen einer Wechselstromverteilung, einer Gleichstromverteilung, eines Gleichrichters und einer Umgebungsüberwachungsvorrichtung umfassen,
**dadurch gekennzeichnet, dass** das Basisstationssystem durch einen Drahtlosnetzverwaltungsserver mit einem Verarbeitungsmodus konfiguriert wird, der unter transparenter Übertragung und Parsen ausgewählt ist, wobei nur dann, wenn der Verarbeitungsmodus für Parsen konfiguriert ist, das Erfassungsmodul (12) dafür konfiguriert ist, die durch die Stromversorgung der Basisstation erstellten Echtzeitantwortdaten zu erfassen, um die Alarmdaten zu parsen, und wenn der Verarbeitungsmodus als transparente Übertragung konfiguriert ist, das Erfassungsmodul (12) dafür konfiguriert ist, die durch die Stromversorgung der Basisstation erstellten Echtzeitantwortdaten nicht zu erfassen, und darauf zu warten, dass ein Stromversorgungsnetzmanager eine Abfrageanweisung an die Stromversorgungsausrüstung der Basisstation sendet, und Antwortdaten der Stromversorgungsausrüstung zu parsen.

2. Vorrichtung nach Anspruch 1, wobei das Alarmverarbeitungsmodul (14) Folgendes umfasst:
ein Extraktionsmodul, das dafür konfiguriert ist, die Echtzeitalarminformationen aus dem Stromversorgungsdatenrahmen zu extrahieren,
ein Aufzeichnungsmodul, das dafür konfiguriert ist, die letzten gemeldeten Alarminformationen aufzuzeichnen,
ein erstes Beurteilungsmodul, das dafür konfiguriert ist zu beurteilen, ob die Echtzeitalarminformationen mit den letzten gemeldeten Alarminformationen übereinstimmen, um ein erstes Beurteilungsergebnis zu erhalten, und
ein Berichtsmodul, das dafür konfiguriert ist, die Echtzeitalarminformationen an den Drahtlosnetzverwaltungsserver zu melden, wenn das erste Beurteilungsergebnis anzeigt, dass die Echtzeitalarminformationen nicht mit den letzten gemeldeten Alarminformationen übereinstimmen.

3. Vorrichtung nach Anspruch 2, wobei das Alarmverarbeitungsmodul (14) des Weiteren Folgendes umfasst:
ein Aktualisierungsmodul, das dafür konfiguriert ist, die in dem Aufzeichnungsmodul aufgezeichneten letzten gemeldeten Alarminformationen zu den Echtzeitalarminformationen zu aktualisieren, wenn das erste Beurteilungsergebnis anzeigt, dass die Echtzeitalarminformationen nicht mit den letzten gemeldeten Alarminformationen übereinstimmen.

4. Vorrichtung nach Anspruch 1, die des Weiteren Folgendes umfasst:
ein erstes Überprüfungsmodul (15), das dafür konfiguriert ist zu überprüfen, ob der Stromversorgungsdatenrahmen korrekt ist, um ein erstes Überprüfungsergebnis zu erhalten,
wobei das Alarmverarbeitungsmodul (14) dafür konfiguriert ist, die Echtzeitalarminformationen in dem Stromversorgungsdatenrahmen an den Drahtlosnetzverwaltungsserver zu melden, wenn das erste Überprüfungsergebnis anzeigt, dass der Stromversorgungsdatenrahmen korrekt ist, und den Stromversorgungsdatenrahmen zu verwerfen, wenn das erste Überprüfungsergebnis anzeigt, dass der Stromversorgungsdatenrahmen nicht korrekt ist.

5. Vorrichtung nach Anspruch 1, die des Weiteren Folgendes umfasst:
ein zweites Überprüfungsmodul, das dafür konfiguriert ist zu überprüfen, ob der Stromversorgungsdatenrahmen korrekt ist, um ein zweites Überprüfungsergebnis zu erhalten, und
ein zweites Beurteilungsmodul, das dafür konfiguriert ist zu beurteilen, ob der Stromversorgungsdatenrahmen von einem Alarmtyp ist, wenn das zweite Überprüfungsergebnis anzeigt, dass der Stromversorgungsdatenrahmen korrekt ist, um ein zweites Beurteilungsergebnis zu erhalten,
wobei das Alarmverarbeitungsmodul (14) dafür konfiguriert ist, die Echtzeitalarminformationen in dem Stromversorgungsdatenrahmen nur dann an den Drahtlosnetzverwaltungsserver zu melden, wenn das zweite Beurteilungsergebnis anzeigt, dass der Stromversorgungsdatenrahmen von dem Alarmtyp ist.

6. Verfahren zum Steuern und Beaufsichtigen und Ausgeben eines Alarms von einer Stromversorgung einer Basisstation, wobei das Verfahren auf ein Basisstationssystem angewendet wird, und das Verfahren Folgendes umfasst:
Senden einer Abfrageanweisung an die Stromversorgung der Basisstation (31),
wobei die gesendete Abfrageanweisung ein Wechselstromverteilungsmodul, ein Gleichstromverteilungsmodul, einen Gleichrichter und eine Umgebungsüberwachungsvorrichtung der Stromversorgung der Basisstation umfasst,
Erfassen von Echtzeitantwortdaten, die durch die Stromversorgung der Basisstation erstellt wurden, gemäß der Abfrageanweisung (32),
Rahmen der Echtzeitantwortdaten in einem Stromversorgungsdatenrahmen mit einem Rahmenkopf von 0x7e und einem Rahmenende von OxOd gemäß einem Kommunikationsprotokoll YD/T 1104-2001 (33), wobei der Stromversorgungsdatenrahmen einen Fehlerzustand der Stromversorgung der Basisstation enthält, und
Melden von Echtzeitalarminformationen in dem Stromversorgungsdatenrahmen an einen Drahtlosnetzverwaltungsserver (34), wobei die Echtzeitalarminformationen Alarmbedingungen einer Wechselstromverteilung, einer Gleichstromverteilung, eines Gleichrichters und einer Umgebungsüberwachungsvorrichtung umfassen,
**dadurch gekennzeichnet, dass** das Erfassen von Echtzeitantwortdaten, die durch die Stromversorgung der Basisstation erstellt wurden, gemäß der Abfrageanweisung (32) umfasst, dass:
ein Drahtlosnetzverwaltungsserver einen Verarbeitungsmodus, der unter transparenter Übertragung und Parsen ausgewählt ist, für die Basisstationssystem konfiguriert,
nur dann, wenn der Verarbeitungsmodus als Parsen konfiguriert ist, Echtzeitantwortdaten, die durch die Stromversorgung der Basisstation erstellt wurden, gemäß der Abfrageanweisung erfasst werden, um Alarmdaten zu parsen,
wenn der Verarbeitungsmodus als transparente Übertragung konfiguriert ist, keine Echtzeitantwortdaten, die durch die Stromversorgung der Basisstation erstellt wurden, erfasst werden, und abgewartet wird, dass ein Stromversorgungsnetzmanager eine Abfrageanweisung an die Stromversorgungsausrüstung sendet, und Antwortdaten der Stromversorgungsausrüstung geparst werden.

7. Verfahren nach Anspruch 6, wobei das Melden von Echtzeitalarminformationen in dem Stromversorgungsdatenrahmen an einen Drahtlosnetzverwaltungsserver Folgendes umfasst:
Extrahieren der Echtzeitalarminformationen aus dem Stromversorgungsdatenrahmen,
Beurteilen, ob die Echtzeitalarminformationen mit den letzten gemeldeten Alarminformationen, die zuvor aufgezeichnet wurden, übereinstimmen, um ein erstes Beurteilungsergebnis zu erhalten, und
wenn das erste Beurteilungsergebnis anzeigt, dass die Echtzeitalarminformationen nicht mit den letzten gemeldeten Alarminformationen übereinstimmen, Melden der Echtzeitalarminformationen an den Drahtlosnetzverwaltungsserver.

8. Verfahren nach Anspruch 7, wobei das Melden von Echtzeitalarminformationen in dem Stromversorgungsdatenrahmen an einen Drahtlosnetzverwaltungsserver Folgendes umfasst:
wenn das erste Beurteilungsergebnis anzeigt, dass die Echtzeitalarminformationen nicht mit den letzten gemeldeten Alarminformationen übereinstimmen, Aktualisieren der letzten gemeldeten Alarminformationen zu den Echtzeitalarminformationen.

9. Verfahren nach Anspruch 6, das des Weiteren Folgendes umfasst:
Überprüfen, ob der Stromversorgungsdatenrahmen korrekt ist, um ein erstes Überprüfungsergebnis zu erhalten (44),
wobei das Melden von Echtzeitalarminformationen in dem Stromversorgungsdatenrahmen an einen Drahtlosnetzverwaltungsserver Folgendes umfasst:
wenn das erste Überprüfungsergebnis anzeigt, dass der Stromversorgungsdatenrahmen korrekt ist, Melden der Echtzeitalarminformationen in dem Stromversorgungsdatenrahmen an den Drahtlosnetzverwaltungsserver (45), und wenn das erste Überprüfungsergebnis anzeigt, dass der Stromversorgungsdatenrahmen nicht korrekt ist, Verwerfen des Stromversorgungsdatenrahmens.

10. Verfahren nach Anspruch 6, das des Weiteren Folgendes umfasst:
Überprüfen, ob der Stromversorgungsdatenrahmen korrekt ist, um ein zweites Überprüfungsergebnis zu erhalten, und
wenn das zweite Überprüfungsergebnis anzeigt, dass der Stromversorgungsdatenrahmen korrekt ist, Beurteilen, ob der Stromversorgungsdatenrahmen von einem Alarmtyp ist, um ein zweites Beurteilungsergebnis zu erhalten,
wobei das Melden von Echtzeitalarminformationen in dem Stromversorgungsdatenrahmen an einen Drahtlosnetzverwaltungsserver Folgendes umfasst:
nur dann, wenn das zweite Beurteilungsergebnis anzeigt, dass der Stromversorgungsdatenrahmen von dem Alarmtyp ist, Melden der Echtzeitalarminformationen in dem Stromversorgungsdatenrahmen an den Drahtlosnetzverwaltungsserver.

## Revendications

1. Appareil de commande, de supervision et de déclenchement d'une alarme depuis une alimentation d'énergie d'une station de base, l'appareil étant appliqué à un système de station de base, et l'appareil comprenant :
un module d'interrogation (11) configuré pour transmettre une instruction d'interrogation à l'alimentation d'énergie de la station de base ; dans lequel l'instruction d'interrogation transmise comprend un module de distribution d'énergie à courant alternatif, un module de distribution d'énergie à courant continu, un redresseur et un dispositif de surveillance d'environnement de l'alimentation d'énergie de la station de base ;
un module d'acquisition (12) configuré pour acquérir des données de réponse en temps réel fournies par l'alimentation d'énergie de la station de base en fonction de l'instruction d'interrogation ;
un module de tramage de données (13) configuré pour tramer les données de réponse en temps réel dans une trame de données d'alimentation d'énergie avec une tête de trame de 0x7e et une fin de trame de OxOd selon un protocole de communication YD/T 1104-2001 ; dans lequel la trame de données d'alimentation d'énergie comprend un état de défaut de l'alimentation d'énergie de la station de base ; et
un module de traitement d'alarme (14) configuré pour rapporter des informations d'alarme en temps réel dans la trame de données d'alimentation d'énergie au serveur de gestion de réseau sans fil ; dans lequel les informations d'alarme en temps réel comprennent des termes d'alarme de distribution d'énergie à courant alternatif, de distribution d'énergie à courant continu, de redresseur et de dispositif de surveillance d'environnement ;
**caractérisé en ce que** le système de station de base est configuré par un serveur de gestion de réseau sans fil avec un mode de traitement sélectionné parmi une transmission transparente et une analyse syntaxique ; uniquement lorsque le mode de traitement est configuré pour une analyse syntaxique, le module d'acquisition (12) est configuré pour acquérir les données de réponse en temps réel fournies par l'alimentation d'énergie de la station de base pour l'analyse syntaxique de données d'alarme ; lorsque le mode de traitement est configuré pour une transmission transparente, le module d'acquisition (12) est configuré pour ne pas acquérir les données de réponse en temps réel fournies par l'alimentation d'énergie de la station de base, attendre qu'un gestionnaire de réseau d'alimentation d'énergie transmette une instruction d'interrogation à l'équipement d'alimentation d'énergie de la station de base et effectuer l'analyse syntaxique des données de réponse de l'équipement d'alimentation d'énergie.

2. Appareil selon la revendication 1, dans lequel le module de traitement d'alarme (14) comprend :
un module d'extraction configuré pour extraire les informations d'alarme en temps réel de la trame de données d'alimentation d'énergie ;
un module d'enregistrement configuré pour enregistrer les dernières informations d'alarme rapportées ;
un premier module de jugement configuré pour juger si les informations d'alarme en temps réel sont cohérentes avec les dernières informations d'alarme rapportées, afin d'obtenir un premier résultat de jugement ; et
un module de rapport configuré pour rapporter les informations d'alarme en temps réel au serveur de gestion de réseau sans fil lorsque le premier résultat de jugement indique que les informations d'alarme en temps réel ne sont pas cohérentes avec les dernières informations d'alarme rapportées.

3. Appareil selon la revendication 2, dans lequel le module de traitement d'alarme (14) comprend en outre :
un module de mise à jour configuré pour mettre à jour les dernières informations d'alarme rapportées enregistrées dans le module d'enregistrement avec les informations d'alarme en temps réel lorsque le premier résultat de jugement indique que les informations d'alarme en temps réel ne sont pas cohérentes avec les dernières informations d'alarme rapportées.

4. Appareil selon la revendication 1, comprenant en outre :
un premier module de contrôle (15) configuré pour contrôler si la trame de données d'alimentation d'énergie est correcte, afin d'obtenir un premier résultat de contrôle ;
dans lequel le module de traitement d'alarme (14) est configuré pour rapporter les informations d'alarme en temps réel dans la trame de données d'alimentation d'énergie au serveur de gestion de réseau sans fil lorsque le premier résultat de contrôle indique que la trame de données d'alimentation d'énergie est correcte ; et rejeter la trame de données d'alimentation d'énergie lorsque le premier résultat de contrôle indique que la trame de données d'alimentation d'énergie est incorrecte.

5. Appareil selon la revendication 1, comprenant en outre :
un deuxième module de contrôle configuré pour contrôler si la trame de données d'alimentation d'énergie est correcte, afin d'obtenir un deuxième résultat de contrôle ; et
un deuxième module de jugement configuré pour juger si la trame de données d'alimentation d'énergie est d'un type d'alarme lorsque le deuxième résultat de contrôle indique que la trame de données d'alimentation d'énergie est correcte, afin d'obtenir un deuxième résultat de jugement ;
dans lequel le module de traitement d'alarme (14) est configuré pour rapporter les informations d'alarme en temps réel dans la trame de données d'alimentation d'énergie au serveur de gestion de réseau sans fil uniquement lorsque le deuxième résultat de jugement indique que la trame de données d'alimentation d'énergie est du type d'alarme.

6. Procédé de commande, de supervision et de déclenchement d'une alarme depuis une alimentation d'énergie d'une station de base, le procédé étant appliqué à un système de station de base, et le procédé comprenant :
transmettre une instruction d'interrogation à l'alimentation d'énergie de la station de base (31) ;
dans lequel l'instruction d'interrogation transmise comprend un module de distribution d'énergie à courant alternatif, un module de distribution d'énergie à courant continu, un redresseur et un dispositif de surveillance d'environnement de l'alimentation d'énergie de la station de base ;
acquérir des données de réponse en temps réel fournies par l'alimentation d'énergie de la station de base en fonction de l'instruction d'interrogation (32) ;
tramer les données de réponse en temps réel dans une trame de données d'alimentation d'énergie avec une tête de trame de 0x7e et une fin de trame de OxOd selon un protocole de communication YD/T 1104-2001 (33) ; dans lequel la trame de données d'alimentation d'énergie comprend un état de défaut de l'alimentation d'énergie de la station de base ; et
rapporter des informations d'alarme en temps réel dans la trame de données d'alimentation d'énergie à un serveur de gestion de réseau sans fil (34) ; dans lequel les informations d'alarme en temps réel comprennent des termes d'alarme de distribution d'énergie à courant alternatif, de distribution d'énergie à courant continu, de redresseur et de dispositif de surveillance d'environnement ;
**caractérisé en ce que** l'acquisition de données de réponse en temps réel fournies par l'alimentation d'énergie de la station de base en fonction de l'instruction d'interrogation (32) comprend :
un serveur de gestion de réseau sans fil configurant un mode de traitement sélectionné parmi une transmission transparente et une analyse syntaxique pour le système de station de base ;
uniquement lorsque le mode de traitement est configuré pour une analyse syntaxique, l'acquisition de données de réponse en temps réel fournies par l'alimentation d'énergie de la station de base en fonction de l'instruction d'interrogation pour l'analyse syntaxique de données d'alarme ;
lorsque le mode de traitement est configuré pour une transmission transparente, la non-acquisition de données de réponse en temps réel fournies par l'alimentation d'énergie de la station de base, l'attente qu'un gestionnaire de réseau d'alimentation d'énergie transmette une instruction d'interrogation à l'équipement d'alimentation d'énergie et l'analyse syntaxique des données de réponse de l'équipement d'alimentation d'énergie.

7. Procédé selon la revendication 6, dans lequel le rapport d'informations d'alarme en temps réel dans la trame de données d'alimentation d'énergie à un serveur de gestion de réseau sans fil comprend :
extraire les informations d'alarme en temps réel de la trame de données d'alimentation d'énergie ;
juger si les informations d'alarme en temps réel sont cohérentes avec les dernières informations d'alarme rapportées qui sont préalablement enregistrées, afin d'obtenir un premier résultat de jugement ; et
lorsque le premier résultat de jugement indique que les informations d'alarme en temps réel ne sont pas cohérentes avec les dernières informations d'alarme rapportées, rapporter les informations d'alarme en temps réel au serveur de gestion de réseau sans fil.

8. Procédé selon la revendication 7, dans lequel le rapport d'informations d'alarme en temps réel dans la trame de données d'alimentation d'énergie à un serveur de gestion de réseau sans fil comprend :
lorsque le premier résultat de jugement indique que les informations d'alarme en temps réel ne sont pas cohérentes avec les dernières informations d'alarme rapportées, mettre à jour les dernières informations d'alarme rapportées avec les informations d'alarme en temps réel.

9. Procédé selon la revendication 6, comprenant en outre :
contrôler si la trame de données d'alimentation d'énergie est correcte, afin d'obtenir un premier résultat de contrôle (44) ;
dans lequel le rapport des informations d'alarme en temps réel dans la trame de données d'alimentation d'énergie à un serveur de gestion de réseau sans fil comprend :
lorsque le premier résultat de contrôle indique que la trame de données d'alimentation d'énergie est correcte, rapporter les informations d'alarme en temps réel dans la trame de données d'alimentation d'énergie au serveur de gestion de réseau sans fil (45) ; et lorsque le premier résultat de contrôle indique que la trame de données d'alimentation d'énergie est incorrecte, rejeter la trame de données d'alimentation d'énergie.

10. Procédé selon la revendication 6, comprenant en outre :
contrôler si la trame de données d'alimentation d'énergie est correcte, afin d'obtenir un deuxième résultat de contrôle ; et
lorsque le deuxième résultat de contrôle indique que la trame de données d'alimentation d'énergie est correcte, juger si la trame de données d'alimentation d'énergie est d'un type d'alarme afin d'obtenir un deuxième résultat de jugement ;
dans lequel le rapport d'informations d'alarme en temps réel dans la trame de données d'alimentation d'énergie à un serveur de gestion de réseau sans fil comprend :
uniquement lorsque le deuxième résultat de jugement indique que la trame de données d'alimentation d'énergie est du type d'alarme, rapporter les informations d'alarme en temps réel dans la trame de données d'alimentation d'énergie au serveur de gestion de réseau sans fil.
